Europäisches Patentamt

European Patent Office

Office européen des brevets

(11) Veröffentlichungsnummer: **0 513 445 A1**

(12) **EUROPÄISCHE PATENTANMELDUNG**

(21) Anmeldenummer: **91250133.5**

(22) Anmeldetag: **14.05.91**

(51) Int. Cl.5: **B09B 3/00**

(43) Veröffentlichungstag der Anmeldung:
**19.11.92 Patentblatt 92/47**

(84) Benannte Vertragsstaaten:
**DE NL**

(71) Anmelder: **BBS CONSULTING**
**Osteröder Strasse 50**
**W-3392 Clausthal-Zellerfeld(DE)**

(72) Erfinder: **Schmidt, Rüdiger**

Osteröderstrasse 50
W-3392 Clausthal Zellerfeld(DE)
Erfinder: **Wachholz, Friedrich**
Osteröderstrasse 50
W-3392 Clausthal Zellerfeld(DE)

(74) Vertreter: **Wenzel, Heinz-Peter, Dipl.-Ing. et al**
**Patentanwälte, Wenzel & Kalkoff Grubes**
**Allee 26 Postfach 73 04 66**
**W-2000 Hamburg 73(DE)**

(54) Verfahren und Anlage zur Reinigung kontaminierten Materials.

(57) Es sollen Möglichkeiten geschaffen werden, um auf physikalischem Wege kontaminierte Fein- und Feinstkornfraktionen wie Böden, Schlämme, Zunder etc. wirtschaftlich und technisch effektiv zu reinigen. Zu diesem Zwecke wird das das Material im dispergierten Zustand enthaltende fluidisierte Gemenge einer Druckbeaufschlagung eines hochgespannten Gases unter schneller Expansion desselben unterworfen und anschließend eine vorzugsweise schnelle Trennung zwischen fester und fluider Phase durchgeführt. Eine Anlage zur Durchführung dieses Reinigungsverfahrens umfaßt einen Reaktor (22) zur Aufnahme der Dispersion, mit einer Pulseinrichtung (23) zur Einzelpuls-Abgabe hochgespannten Gases an die Dispersion, eine Hochdruckeinrichtung (24,25,26) zur Versorgung der Pulseinrichtung mit dem hochgespannten Gas, und einen Feststoffabschneider (27) für aus dem Reaktor ausgetragene Dispersion. Als Resultat erhält man einen dekontaminierten, biologischen aktiven und einbaubaren Boden oder z.B. direkt als Zuschlagstoff im Eisenhüttenprozeß einsetzbaren entölten Zunder.

Fig. 1

Die Erfindung betrifft ein Verfahren und eine Anlage zur Reinigung kontaminierten Materials im Fein- und Feinstkornbereich, wobei das zu reinigende Material in einem Fluid in Schwebezustand gebracht wird.

Die Reinigung von Materialien in diesen Korngrößenbereichen, die unter 63 $\mu$m liegen, hat sich bisher als außerordentlich problematisch erwiesen, da man nicht in der Lage ist, die Haftung zwischen Fein- bzw. Feinstkorn zu lösen; vielmehr wird das aufgeschlämmte Material bisher nur derart behandelt, daß z.B. auf Bandfilterpressen oder mittels Zyklonen das Feinmaterial lediglich abgetrennt wird, wobei aus den gröberen Bestandteilen das Kontaminat durch Auswaschen entfernt wird. Das kontaminierte Feinmaterial wird verfestigt, um auf einer Deponie abgelagert zu werden, oder es wird in einem thermischen (Verbrennungs-) Prozeß entsorgt. Es werden somit bisher entweder hochkontaminierte oder biologisch abgetötete Feinstkornfraktionen erzeugt.

Ebenso bestehen heute erhebliche Schwierigkeiten bei der Reinigung anderer Materialien industrieller Herkunft, wie z.B. Walzwerkszunder. Hier liegt das Problem bei der Öl-Entfernung aus dem Feinmaterial, da dieses Öl beim Sintern die Elektro Staubfilter der eingesetzten Anlage zusetzt. Deshalb werden bisher Walzwerkszunder entweder deponiert oder in Ländern mit weniger ausgeprägter Umweltschutzgesetzgebung verarbeitet. Das erfordert, abgesehen von der entstehenden Umweltbelastung, zusätzliche Deponie- oder Transportkosten.

Der Erfindung liegt deshalb die Aufgabe zugrunde, Möglichkeiten zu schaffen, um auf physikalischen Wege kontaminierte Fein- und Feinstkornfraktionen wie Böden, Schlämme, Zunder etc. wirtschaftlich und technisch effektiv zu reinigen.

Diese Aufgabe wird verfahrenstechnisch dadurch gelöst, daß das das Material in dispergierten Zustand enthaltende fluidisierte Gemenge, normalerweise in Form einer Suspension bzw. eines Aerosols, einer Druckbeaufschlagung eines hochgespannten Gases unter schneller Expansion desselben unterworfen und anschließend eine vorzugsweise schnelle Trennung zwischen fester und fluider Phase durchgeführt wird. Dabei kommt es zunächst darauf an, daß der das zu reinigende Material enthaltende Schlamm pumpfähig ist; der Feststoffanteil in dem fluidisierten Gemenge wie der Suspension kann je nach Struktur und Beschaffenheit des Materials bevorzugt zwischen 5 und 35 % liegen. Bei dem Verfahren macht man sich die Erkenntnis zunutze, daß bei starker Beschleunigung zwischen Fein- bzw. Feinstkorn und aufsitzender Kontamination Scherkräfte auftreten sowie Reibungseffekte zwischen Fein- bzw. Feinstkorn und Fluid (Suspensionsflüssigkeit) entstehen, die zur Ablösung der anhaftenden Kontaminate von dem Grundmaterial führen. Die Beschleunigung wird durch die schnelle Expansion der hochgespannten Gase, bei denen es sich um Luft oder Stickstoff mit einem Druck in der Größenordnung von 20 MPa handeln kann, sowie die hieraus resultierenden Druckschwankungen und Kavitationseffekte erzielt. Die Kontamination, bei der es sich um organische Stoffe oder Schwermetalle handeln kann, wird in das Fluid, für das man je nach Art des zu reinigenden Materials die unterschiedlichsten Suspensionsflüssigkeiten oder Gase einsetzen kann, überführt. So kommt für mineralische Materialen, schon aus Kostengründen, vorzugsweise Wasser in Betracht, jedoch sind auch alle anderen Suspensionsflüssigkeiten und Additive der Aufbereitungstechnik denkbar.

Das Resultat eines solchen Reinigungsverfahrens ist, wenn es für Bodenmaterialien angewendet wird, ein dekontaminierter, biologisch aktiver und einbaubarer Boden. Bei Walzwerkszunder ergibt sich ein im Eisenhüttenprozeß direkt und infolge der Ölausscheidung ohne diesbezügliche Belastung der Umwelt verwendbarer Zuschlagstoff. Man spart Deponie- oder Transportkosten ein. Weitere Anwendungen im industriellen Sektor sind ohne weiteres denkbar und möglich.

Bei Verwendung von Flüssigkeiten können der Suspension vorzugsweise geeignete Additiva wie Stellmittel oder Tenside beigegeben werden, um eine Wiederanlagerung der Kontamination zu verhindern. In Falle von Aerosolen kann das Stellmittel z.B. $CO_2$ sein. Die anschließende, im Hinblick auf das Verhindern von Wiederanlagerung bevorzugt schnelle Phasentrennung führt dazu, daß die Kontamination zunächst in dem Fluid verbleibt und aus diesem in geeigneter Weise entfernt werden kann, während das Grundmaterial getrocknet und der Wiederverwendung zugeführt werden kann. Die Wiederverwendung von Zunder in der Stahlerzeugung wurde bereits erwähnt und ist hinreichend bekannt, während für feine Bodenbestandteile, bei denen es sich in der Regel um Silikate handelt, eine Verwendung z.B. in der Feuerfest- und Keramik-Industrie in Betracht kommt.

Eine Anlage für die Durchführung dieses Reinigungsverfahrens umfaßt

a) einen Reaktor zur Aufnahme der Dispersion, mit einer Pulseinrichtung zur Einzelpuls-Abgabe hochgespannten Gases an die Dispersion;

b) eine Hochdruckeinrichtung zur Versorgung der Pulseinrichtung mit hochgespanntem Gas; und

c) einen Feststoffabscheider für aus dem Reaktor ausgetragene Dispersion.

Eine solche Anlage läßt sich technisch leicht verwirklichen und wirtschaftlich einsetzen, um die angestebten Reinigungsergebnisse zu erzielen. Dabei kann man sich insbesondere vorhandene Anlagen und Aggregate zunutze machen.

Zur Erreichung eines genügenden Dispergierungsgrades kann die Anlage eine Dispergiereinheit, die vorteilhaft als Rührwerk oder Injektorpumpe vorgesehen sein kann, umfassen, um das kontaminierte Material in einem fluiden Medium ausreichend für die weitere Verarbeitung zu dispergieren.

Das Fassungsvermögen des Reaktors wird bevorzugt ein Mehrfaches des vorgesehenen Durchsatzes der Dispersion aufweisen, um zu gewährleisten, daß die Dispersion eine genügend lange Verweilzeit in dem Reaktor hat und der angestrebte Reinigungseffekt auch tatsächlich weitestgehend vollständig eintritt.

Die Pulseinrichtung für die kontinuierliche Abgabe von Einzel-Pulsen des hochgespannten Gases kann vorteilhaft, gerade auch im Hinblick auf die Beherrschung der hohen Drücke, mittels schnell schaltender pneumatischer Ventile oder eines Drehkolbenverteilers erfolgen. Diese Pulseinrichtung kann Teil einer Hochdruckanlage sein, die einen Verdichter mit nachgeschaltetem Windkessel umfaßt, von dem die Pulseinrichtung beaufschlagt wird, um ihrerseits die Gas-Pulse an den Reaktorraum abzugeben. Dabei kann die Energie- bzw. Pulssteuerung mittels des Druckes des hochgespannten Gases selbst oder über das Volumen oder die Frequenz der Einzelpulse erfolgen, wobei natürlich auch jegliche Kombination dieser Einzelschritte zum Einsatz gelangen kann, wenn sich dies als zweckmäßig erweist. Zu diesem Zweck können mehrere Pulsgeber parallel- und/oder hintereinandergeschaltet betrieben werden. Die genaue Anordnung richtet sich dabei nach den konkreten Anordnungen des jeweiligen Praxisfalles, d.h. die Auswahl kann nach den Erfordernissen des ablaufenden Prozesses, des zu verarbeitenden Materials und ähnlichen Kriterien getroffen werden.

Um die von der Kontamination befreiten Feststoffe aus dem Reaktionsfluid abzuscheiden, kann zweckmäßigerweise eine herkömmliche Vakuum-Band-Filter-Einrichtung zur Suspensionstrennung eingesetzt werden. Für die Abtrennung spezieller Materialien mit ganz spezifischen Materialeigenschaften können auch andere Formen der Phasentrennung sinnvoll sein, beim angesprochenen Walzwerkszunder z.B. eine gravitative oder magnetische Trennung.

In vielen Fällen, insbesondere dann, wenn sich das verwendete Fluid bzw. die Suspensionsflüssigkeit einerseits und das Kontaminat andererseits nach der Feststoffabscheidung wirtschaftlich günstig trennen lassen, ist es vorteilhaft, das Fluid im geschlossenen Kreislauf zu führen, wobei die Reinigung von der Kontamination mittels herkömmlicher Reinigungs- oder Wiederaufbereitungseinrichtungen erfolgen kann. Stellt sich eine solche Trennung als nicht wirtschaftlich heraus, so kann das Fluid bzw. die Suspensionsflüssigkeit entsorgt bzw. deponiert werden.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt

Fig. 1    eine    Prinzip-Darstellung    einer Feinstkorn-Aufbereitungsanlage und

Fig. 2    einen dafür speziell geeigneten Druckverteiler.

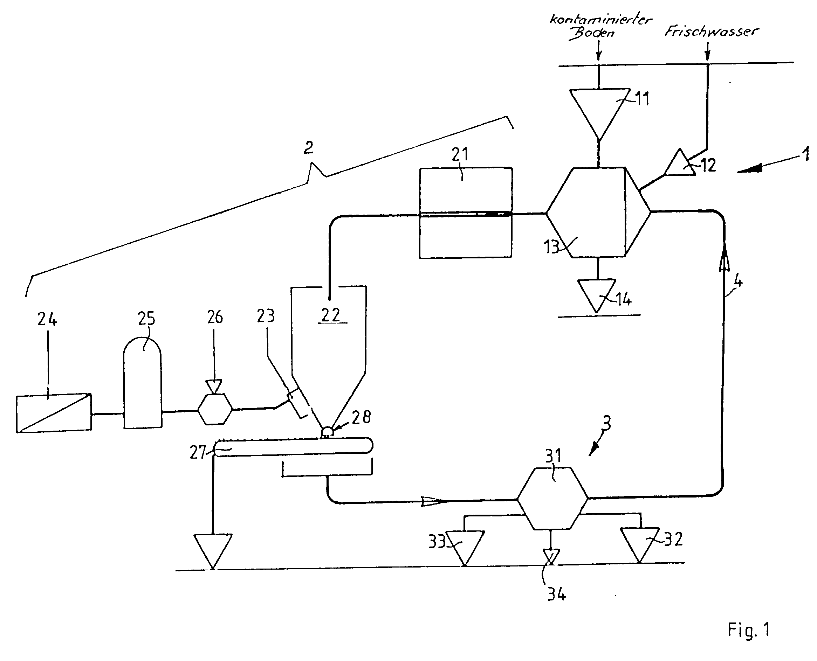

Die in Fig. 1 gezeigte Anlage mit Funktionsablauf umfaßt im wesentlichen drei Hauptkomponenten, nämlich eine Vor- oder Grobreinigungs- bzw. Waschstation 1 für die Durchführung einer konventionellen Attretionsbodenwäsche, eine Feinstkorn-Reinigungsstation 2 und eine Abwasser-Aufbereitungsstation 3. Diese drei Stationen sind im wesentlichen wie folgt aufgebaut:

Die Waschstation 1 umfaßt eine Aufgabeeinrichtung 11 für kontaminierten Boden, eine für die Zufuhr von als Fluid verwendetem Frischwasser geeignete Wasserzuführung 12 mit den erforderlichen Steuer- und Regelorganen, einen Abscheider 13 für Grobanteile und eine Abzugseinrichtung 14, ebenfalls für den Grobanteil. Bei Materialien mit hinreichend hohem Feinanteil kann dieser Anlagenteil entfallen.

Die Feinstkorn-Reinigungsstation 2 umfaßt an ihrem Eingang für bestimmte Fälle, in denen in der Waschstation 1 noch keine hinreichende Dispergierung der Feinstanteile im Prozeßwasser stattgefunden hat, eine Dispergierstufe 21. Kernteil der Station 2 ist ein Reaktor 22, dem ein oder mehrere Druckverteiler 23 angeschlossen ist, um das Innere des Reaktors mit Druckluftpulsen zu versorgen. Dieser Druckverteiler 23 wird weiter unten näher beschrieben. Seine Versorgung mit Druckluft erfolgt von einem Kompressor 24 über einen Windkessel 25 und eine Druckregeleinrichtung 26. Dem Reaktor 22 ist eine Vakuum-Bandfilteranlage 27 nachgeschaltet, letzterer wiederum eine Abzugseinrichtung für gereinigten Feinanteil.

Im Funktionsablauf hinter der Vakuum-Bandfilteranlage 27 befindet sich die Abwasser-Aufbereitungsstation 3, die ein Aufbereitungsaggregat 31 mit einer Oxidationsstufe 32 für organische Schadstoffe, eine Fällungsstufe 33 für Schwermetalle und einen Vorfluter 34 umfaßt. Gereinigtes Prozeßwasser kann, soweit es nicht im Kreislauf geführt wird, an einen Vorfluter 34 abgegeben werden.

Mit 4 ist ein Prozeßwasserkreislauf bezeichnet, der in Pfeilrichtung arbeitet und die drei Stationen in der angegebenen Weise miteinander verbindet.

Die Funktion der Anlage ist wie folgende:
Zu dekontaminierendes Material, also z.B. wie hier kontaminiertes Erdreich wird in der Waschstation 1 einer konventionellen Attretionsbodenwäsche unterzogen. Organische Bestandteile wie Holz, Wurzeln oder Baustoffreste sowie der Grobanteil über 20 mm werden abgetrennt. Der so vorklassierte Boden wird in verschiedenen Rotationstrommeln des Abscheiders 13 bis hinab zum Feinanteil (ca. 100 bis 64 $\mu$m) physikalisch oder chemisch/physikalisch gereinigt. In der Regel erfolgt eine Anreicherung der Schadstoffe in der Feinstfraktion und im Prozeßwasser. Die Feststoffabscheidung erfolgt über konventionelle Siebe, Kammerfilterpressen und/oder Hydrozyklone, die hier nicht näher erörtert zu werden brauchen, da sie dem Fachmann hinsichtlich Aufbau und Funktion geläufig sind.

Das belastete Prozeßwasser und der Feinstkornanteil werden sodann der Feinstkorn-Reinigungsstation 2 zugeleitet. Hier werden sie zunächst, wenn nötig, in der Dispergierstufe 21 homogenisiert und danach dem Reaktor 22 zugeführt. In diesem wird die anhaftende Kontamination vom Feinstkornmaterial abgetrennt und ins Prozeßwasser überführt. Die Abtrennung erfolgt aufgrund von Beschleunigungs- und Reibungseffekten, die durch die schlagartige Expansion hochgespannter Luft in der Flüssigkeit hervorgerufen werden.

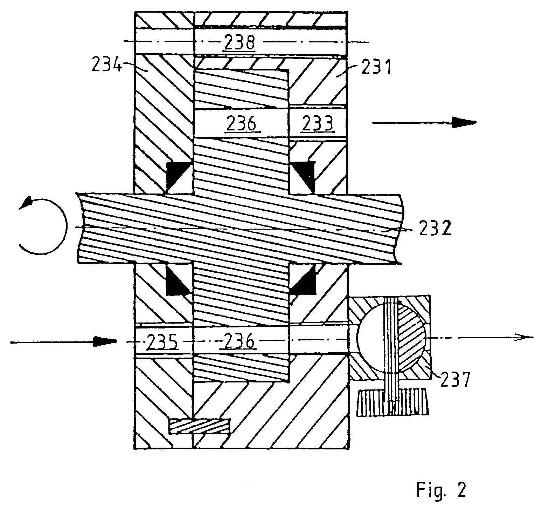

Mit dieser hochgespannten Luft wird der Reaktor 22 von dem Druckverteiler 23 beaufschlagt, dessen Anordnung in Fig. 2 gezeigt ist und dem folgende Grundüberlegungen und Anordnungen zugrunde liegen:

Um in möglichst einfacher Weise ein definiertes Druckluftvolumen in definierter Frequenz erzeugen und abgeben zu können, ist ein Gehäuse 231 mit einem darin rotierend gelagerten Läufer 232 vorgesehen. In dem Gehäuse 231 befindet sich mindestens eine Austrittsöffnung 233, in dessen Deckel 234 mindestens eine Eintrittsbohrung 235. Gehäuse 231 und Deckel 234 sind mittels Verschraubungen 238 miteinander verbunden. Der Läufer 232 hat mindestens eine Bohrung 236 definierten Volumens; zur Erhöhung der Abgabefrequenz können mehrere - wie hier zwei - solcher Bohrungen 236 angeordnet sein.

Wird eine Läuferbohrung 236 an einer Eintrittsbohrung 235 vorbeibewegt, füllt sich die Bohrung 236 mit einer definierten Menge Druckluft. Wird jetzt der Läufer 232 weitergedreht, tritt dieses Druckluftvolumen durch die nächstgelegene Austrittsöffnung 233 aus und kann sich im Reaktor 22 schlagartig entspannen.

Ein Ausblasventil 237 sorgt dafür, daß in den Druckverteiler 23 eingetretene Flüssigkeit mit der Arbeitsdruckluft ausgeblasen werden kann. Im Regelbetrieb ist dieses Ventil geschlossen; es wird nur für Reinigungsarbeiten geöffnet.

Die Wiederanlagerung der durch die schlagartige Druckluftexpansion mit den beschriebenen Effekten abgetrennten Verunreinigungen an das Feinstkorn wird durch die Zugabe geeigneter Stellmittel verhindert. Die nachgeschaltete Vakuum-Bandfilteranlage 27 ermöglich eine kontinuierliche und schnelle Abtrennung des gereinigten Fein- und Feinst-Feststoffanteils über die Abzugseinrichtung 28.

Die der Vakuum-Bandfilteranlage nachgeschaltete konventionelle Abwasser-Aufbereitungsstation 3 arbeitet z.B. mit der Oxidationsstufe 32 (für organische Schadstoffe) und der Fällungsstufe 33 (für Schwermetalle), oder aber auch mit einer für sich bekannten, in diesem Beispiel allerdings nicht erforderlichen Aktivkohle-Absorptionseinrichtung, wie sie beispielsweise in Luft- oder in Wasserfilterungsanlagen eingesetzt wird.

Das gereinigte Prozeßwasser wird, wie durch 4 angedeutet, soweit wie möglich im Kreis geführt.

Zusammenfassend seien die Vorteile einer solchen Anlage, die eine konventionelle Bodenwäsche mit einer speziellen, neuen Behandlung für das Feinstkorn vereinigt, hervorgehoben:
Die konventionelle Bodenwäsche liefert, auch wenn sie für sich allein eingesetzt wird, vergleichsweise kostengünstig ein großes Volumen wieder einbaufähigen Materials bzw. Wirtschaftsgutes. Sie ist jedoch nicht für Böden mit Ton- und Schluffanteilen über max. 30 % einsetzbar. In der Regel müssen deshalb die bei der konventionellen Bodenwäsche anfallenden (meist mit Schadstoffen angereicherten) Bodenanteile deponiert oder thermisch behandelt werden.

Ziel der Kombination einer solchen Bodenwäsche mit der Expansions-Feinstkornwäsche in Station 2 ist es, die im Boden vorliegenden Schadstoffe deutlich unter die gesetzlich vorgegebenen Grenzwerte abzureichern und die Schadstoffe in das Prozeßwasser zu überführen. Dieses Prozeßwasser wird anschließend einer geeigneten Reinigung unterzogen, in der die Schadstoffe entweder abgeschieden oder chemisch umgewandelt werden. Das gereinigte Prozeßwasser wird anschließend im Kreislauf geführt, und evtl. auftretende Mengenverluste werden durch die Zugabe von Frischwasser ausgeglichen.

**Bezugszeichenliste**

| | |
|---|---|
| 1 | Waschstation |
| 11 | Aufgabeeinrichtung |
| 12 | Wasserzuführung |
| 13 | Abscheider |
| 14 | Abzugseinrichtung |
| 2 | Feinstkorn-Reinigungsstation |
| 21 | Dispergierstufe |
| 22 | Reaktor |
| 23 | Druckverteiler |
| 24 | Kompressor |
| 25 | Windkessel |

26        Druckregeleinrichtung
27        Vakuum-Bandfilfteranlage
28        Abzugseinrichtung
231       Gehäuse
232       Läufer
233       Austrittsöffnung
234       Deckel
235       Eintrittsbohrung
236       Läuferbohrung
237       Ausblasventil
238       Verschraubung
3          Abwasser-Aufbereitungsstation
31        Aufbereitungsaggregat
32        Oxidationsstufe f. organische Schadstoffe
33        Fällungsstufe f. Schwermetalle
34        Vorfluter
4          Prozeßwasserkreislauf

## Patentansprüche

1. Verfahren zur Reinigung kontaminierten Materials im Fein- und Feinstkornbereich, wobei das zu reinigende Material in einem Fluid in Schwebezustand gebracht wird, **dadurch gekennzeichnet,** daß das das Material im vollständig dispergierten Zustand enthaltende fluidisierte Gemenge in Form einer Suspension bzw. eines Aerosols einer Druckbeaufschlagung eines hochgespannten Gases unter schneller Expansion desselben unterworfen und anschließend eine Trennung zwischen fester und fluider Phase durchgeführt wird.

2. Verfahren nach Anspruch 1, **dadurch gekennzeichnet,** daß dem fluidisierten Gemenge geeignete Additiva wie Stellmittel oder Tenside beigegeben werden.

3. Verfahren nach Anspruch 1 oder 2, **dadurch gekennzeichnet,** daß die Druckbeaufschlagung mittels kontinuierlich abgegebener Einzelpulse des hochgespannten Gases erfolgt.

4. Verfahren nach Anspruch 3, **dadurch gekennzeichnet,** daß mehrere Pulse zeitlich und/oder räumlich versetzt eingesetzt werden.

5. Verfahren nach Anspruch 3 oder 4, **dadurch ge-kennzeichnet,** daß die Energie- bzw. Pulssteuerung mittels des Drucks des hochgespannten Gases erfolgt.

6. Verfahren nach Anspruch 3 oder 4, **dadurch gekennzeichnet,** daß die Energie- bzw. Pulssteuerung über das Volumen der Einzelpulse erfolgt.

7. Verfahren nach einem der Ansprüche 3 bis 6, **dadurch gekennzeichnet,** daß mittels der Pulsfrequenz eine Leistungssteuerung erfolgt.

8. Verfahren nach einem der Ansprüche 1 bis 7, **dadurch gekennzeichnet,** daß die Trennung der Feststoffe von dem Fluid, insbesondere der Suspensionsflüssigkeit, mittels eines Vakuum-Band-Filters erfolgt.

9. Verfahren nach einem der Ansprüche 1 bis 8, **dadurch gekennzeichnet,** daß das Fluid in geschlossenem Kreislauf geführt wird.

10. Verfahren nach einem der Ansprüche 1 bis 8, **dadurch gekennzeichnet,** daß die Suspensionsflüssigkeit der Entsorgung oder Deponierung zugeführt wird.

11. Anlage zur Reinigung kontaminierten Materials im Fein- und Feinstkornbereich, wobei das zu reinigende Material in einem Fluid in Schwebezustand gebracht wird, umfassend
    a) einen Reaktor (22) zur Aufnahme des fluidisierten Gemenges, mit einer Pulseinrichtung (23) zur Einzelpuls-Abgabe hochgespannten Gases an das Gemenge;
    b) eine Hochdruckeinrichtung (24,25,26) zur Versorgung der Pulseinrichtung mit hochgespanntem Gas; und
    c) einen Feststoffabscheider (27) für aus dem Reaktor ausgetragenes Gemenge.

12. Anlage nach Anspruch 11, **dadurch gekennzeichnet,** daß sie eine Dispergier-Einheit (21) zum Dispergieren des kontaminierten Materials in einem Fluid umfaßt.

13. Anlage nach Anspruch 12, **dadurch gekennzeichnet,** daß die Dispergier-Einheit (21) ein Rührwerk oder eine Injektorpumpe ist.

14. Anlage nach einem der Ansprüche 11 bis 13, **dadurch gekennzeichnet,** daß die Pulseinrichtung (23) ein schnell schaltendes pneumatisches Ventil umfaßt.

15. Anlage nach einem der Ansprüche 11 bis 14, **dadurch gekennzeichnet,** daß die Pulseinrichtung (23) einen Drehkolbenverteiler (231, 232) umfaßt.

16. Anlage nach einem oder mehreren der Ansprüche 11 bis 15, **dadurch gekennzeichnet,** daß sie mehrere Pulseinrichtungen (23) in Parallel- und/oder Reihenschaltung umfaßt.

17. Anlage nach einem der Ansprüche 11 bis 16, **dadurch gekennzeichnet,** daß die Hochdruckeinrichtung einen Verdichter (24) mit nachgeschaltetem Windkessel (25) umfaßt.

18. Anlage nach einem der Ansprüche 11 bis 17, **dadurch gekennzeichnet,** daß der Feststoffabscheider ein Vakuum-Band-Filter (27) umfaßt.

19. Anlage nach einem der Ansprüche 11 bis 18, **dadurch gekennzeichnet,** daß für das ausgetragene Fluid eine Reinigungs- oder Wiederaufbereitungseinrichtung (3) vorgesehen ist.

20. Anlage nach einem der Ansprüche 11 bis 19, **dadurch gekennzeichnet,** daß das Volumen des Reaktors (22) ein Mehrfaches des vorgesehenen Dispersionsdurchsatzes aufweist.

Fig. 1

kontaminierter Boden

Frischwasser

EP 0 513 445 A1

7

Fig. 2

Europäisches
Patentamt

**EUROPÄISCHER RECHERCHENBERICHT**

Nummer der Anmeldung

EP    91 25 0133
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 728 201 (SIEMENS AG)<br><br><br>* Spalte 3, Zeile 41 - Spalte 5, Zeile 1 *<br>* Spalte 6, Zeile 14 - Zeile 39 *<br>* Spalte 7, Zeile 16 - Spalte 8, Zeile 7 *<br>* Spalte 9, Zeile 10 - Zeile 55; Abbildungen * | 1-7,<br>9-13,16,<br>19,20 | B09B3/00 |
| Y |  | 8,14,15,<br>18 |  |
|  | --- |  |  |
| Y | FR-A-2 258 904 (AIR-INDUSTRIE)<br>* Seite 10, Zeile 38 - Seite 11, Zeile 19;<br>Abbildung 9 * | 14,15 |  |
| A |  | 1,3-7,<br>11,16,17 |  |
|  | --- |  |  |
| Y | EP-A-0 325 159 (G E S U GESELLSCHAFT FüR SAUBERE UMWELT MBH)<br>* Spalte 1, Zeile 1 - Zeile 13 *<br>* Spalte 1, Zeile 43 - Spalte 2, Zeile 32 *<br>* Spalte 5, Zeile 13 - Spalte 6, Zeile 9 *<br>* Spalte 7, Zeile 7 - Zeile 19 *<br>* Spalte 8, Zeile 22 - Spalte 9, Zeile 50;<br>Abbildung * | 8,18 |  |
| A |  | 1,2,<br>9-13,19,<br>20 |  |
|  | --- |  |  |
| A | NL-A-8 500 665 (TIMMER)<br><br><br>* das ganze Dokument *<br>--- | 1,2,<br>8-13,<br>18-20 |  |
| A | WO-A-8 707 536 (I.F.S. INGENIEURGESELLSCHAFT FüR STEUERUNGS- UND SYSTEMTECHNIK MBH)<br>* Zusammenfassung *<br>* Seite 2, Zeile 12 - Seite 5, Zeile 5;<br>Abbildungen *<br>--- | 1,2,7,<br>11,14,15 |  |

**RECHERCHIERTE SACHGEBIETE (Int. Cl.5)**

B09B

-/--

Der vorliegende Recherchenbericht wurde für alle Patentansprüche erstellt

| Recherchenort | Abschlußdatum der Recherche | Prüfer |
|---|---|---|
| DEN HAAG | 03 DEZEMBER 1991 | VAN DER ZEE W.T. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0403)

Europäisches
Patentamt

**EUROPÄISCHER RECHERCHENBERICHT**

Nummer der Anmeldung

EP   91 25 0133
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | AUFBEREITUNGS TECHNIK. Bd. 31, Nr. 12, Dezember 1990, WIESBADEN DE Seiten 656 - 662; GROHS: 'DIE AUFBEREITUNGSTECHNIK DES BODENWASCHENS' * Seite 658, linke Spalte, Zeile 1 - Seite 659, linke Spalte, Zeile 57 * * Seite 660, linke Spalte, Zeile 37 - Zeile 41; Abbildungen * ----- | 1,2,11, 12 | |
| | | | **RECHERCHIERTE SACHGEBIETE (Int. Cl.5 )** |

Der vorliegende Recherchenbericht wurde für alle Patentansprüche erstellt

| Recherchenort | Abschlußdatum der Recherche | Prüfer |
|---|---|---|
| DEN HAAG | 03 DEZEMBER 1991 | VAN DER ZEE W.T. |